# EUROPEAN PATENT APPLICATION

(11) **EP 3 173 157 A1**
(43) Date of publication of application: **31.05.2017**
(21) Application number: 16200220.8
(22) Date of filing: 23.11.2016
(51) Int. Cl.: B05C 17/005

(54) **INTEGRATED MULTICOMPONENT DISPENSING SYSTEM AND ASSOCIATED METHODS**

(30) Priority: 25.11.2015 US 201562259812 P
(71) Applicant: Nordson Corporation, Westlake, OH 44145 (US)
(72) Inventor: SPRINGHORN, Robert W, Cream Ridge, NJ 08514 (US)
(74) Representative: Findlay, Alice Rosemary

(57) **Abstract**

An integrated multicomponent dispensing system for use with a fluid dispenser and associated methods of manufacture, such as by 3D printing are provided. The system includes a cartridge including first and second cylinders having first and second chambers for storing first and second fluid components, respectively, and first and second fluid outlets. A static mixer of the system includes a fluid passageway and a plurality of mixing baffles configured to mix the first and second fluid components upon delivery into the fluid passageway. A frangible closure may also be formed integral with the cartridge and/or the static mixer to prevent discharge of the fluid components into the static mixer until this is desired. The formation of the static mixer and optionally also the cartridge as an integral, unitary piece reduces cost of assembly and storage of multiple parts conventionally formed separately.

## Description

The present invention generally relates to a fluid dispenser and, more particularly, to an integrated multicomponent dispensing system combining various elements of a fluid dispenser configured for mixing and dispensing multi-component fluids.

Various types of fluid dispensers are known from the prior art, many of these being designed like a pistol. Such fluid dispensers are used to dispense one or more components from a container, which is in most cases designed in the form of a single or double syringe or of a corresponding cartridge.

Conventional multi-component fluid dispensers include multiple elements such as, for example, a dual cylinder dispensing cartridge, a cartridge closure, a static mixer, and a nozzle, which are typically manufactured separately as anywhere from three to five pieces. Thus, these elements must be assembled together by the cartridge producer, the static mixer producer, the filler, and/or the end user. Such assembly requires additional labor and cost. Moreover, each piece must be stored and handled individually. Therefore, manufacturing the elements of fluid dispensers as separate pieces and then assembling the elements together collectively is complex, costly, and time-consuming. A reduction in the number of pieces and operations to produce a fluid dispenser is desirable to reduce the cost of assembly, work in-process, and inventories.

However, manufacturing the elements of fluid dispensers as separate pieces is typically viewed as necessary in order to avoid potential operating problems such as premature mixing and/or discharge of fluid components. For example, a dual cylinder dispensing cartridge may have a pair of cylinders for storing two different fluids or fluid components, such as two reactive compounds used in epoxy glue or molding compound. If the two fluids prematurely enter the nozzle and/or the mixer together, the fluids may react and cure within the mixer, thereby blocking a fluid passageway therein and thus disabling the static mixer from future use. In order to prevent such premature mixing, in conventional fluid dispensers the static mixer is manufactured as a separate piece from the cartridge, and the cartridge further includes a cartridge closure for separately sealing the fluids in their respective cylinders. In one example, see the cap closure temporarily associated with a dual fluid cartridge described in U.S. Patent No. 6,484,904 to Horner et al. When the fluids are to be mixed and dispensed, the user may puncture or otherwise remove the cartridge closure just prior to attaching the static mixer, or the static mixer may be equipped with a lance for puncturing the closure as it is attached, thereby allowing the fluids to enter the static mixer and mix. Therefore, manufacturing the static mixer separately from the cartridge enables conventional fluid dispensers to function properly, by avoiding premature discharge and mixing when multicomponent fluids are to be dispensed.

In addition, manufacturing the elements of fluid dispensers as separate pieces has been traditionally viewed as the only way to produce certain types of elements of fluid dispensers. For example, in a static mixer, fluids are typically mixed together by dividing and recombining the fluids in an overlapping manner, which is achieved by forcing the fluid over a series of mixing baffles of alternating geometry. Such division and recombination causes the layers of the fluids being mixed to thin and eventually diffuse past one another. This mixing process has proven to be very effective, especially with high viscosity fluids. However, mixing baffles with a high number of intersecting blades (which increases the effectiveness of mixing achieved by the baffle) are more difficult to manufacture. For example, U.S. Patent No. 4,220,416 to Brauner et al. describes a mixing baffle molded as two V-shaped comb-like portions molded separately and intermeshed with each other before insertion into the static mixer. The high number of intersections between blades in these mixing baffles define a significant number of undercuts that are not moldable without specialty molding equipment or that are impossible to mold. Furthermore, a highly complex mixing baffle may be impossible to mold integrally with the static mixer in which it is to be housed. Therefore, such a static mixer is typically manufactured separately from the mixing baffles.

But as noted above, this separate manufacture and later assembly of the cartridge, static mixer, nozzle, etc. adds significant complexity and cost to the process, which can also hamper the ability to customize fluid dispensers for smaller scale projects and applications. Thus, it would be desirable to address some of the problems associated with manufacturing and assembling fluid dispensers.

In accordance with one aspect of this disclosure, a dispensing system is provided for use with a fluid dispenser that is configured to dispense a mixture of multiple fluid components. The system includes a cartridge with a first cylinder defining a first chamber for holding a first fluid component, and a second cylinder defining a second chamber for holding a second fluid component. The cartridge also includes first and second fluid outlets in fluid communication with the first and second chambers, respectively. The system further includes a static mixer with an elongate tubular body defining a fluid passageway configured to communicate with the first and second fluid outlets, and a plurality of mixing baffles located within the fluid passageway and configured to mix the first and second fluid components. The elongate tubular body and mixing baffles of the static mixer are integrally formed as a unitary piece. As such, the need to manufacture, store, and assemble all these parts as separate components is removed, thereby reducing cost and complexity of manufacturing the dispensing system and the fluid dispenser.

In accordance with another aspect of this disclosure, a dispensing system is provided for use with a fluid dispenser that is configured to dispense a mixture of multiple fluid components. The system includes a cartridge with a first cylinder defining a first chamber for holding a first fluid component, and a second cylinder defining a second chamber for holding a second fluid component. The cartridge also includes first and second fluid outlets in fluid communication with the first and second chambers, respectively. The system further includes a static mixer with an elongate tubular body defining a fluid passageway configured to communicate with the first and second fluid outlets, and a plurality of mixing baffles located within the fluid passageway and configured to mix the first and second fluid components. The first and second cylinders of the cartridge and the elongate tubular body and mixing baffles of the static mixer are all integrally formed as a unitary piece. As such, the need to manufacture, store, and assemble all these parts as separate components is removed, thereby further reducing cost and complexity of manufacturing the dispensing system and the fluid dispenser.

Preferably, the system further includes a first frangible closure member positioned between the first fluid outlet and the fluid passageway, and a second frangible closure member positioned between the second fluid outlet and the fluid passageway. The first and second frangible closure members may each include a frangible outer portion and a hinged inner portion. In one embodiment, the frangible outer portion is attached to an interior wall of the cartridge. In another embodiment, the cartridge further includes a divider separating the first and second fluid outlets, and the hinged inner portion is attached to the divider. The frangible outer portion may be configured to break at a threshold pressure, and the hinged inner portion may be configured to withstand the threshold pressure. The frangible closure members are also integrally formed as a unitary piece with the static mixer and the cartridge.

According to another aspect, a method of manufacturing a dispensing system for use with a fluid dispenser includes laying down successive layers or dots of material under computer control to integrally form a cartridge and a static mixer. The laying down of successive layers or dots of material further includes forming the cartridge to include a first cylinder defining a first chamber for holding a first fluid component, and a second cylinder defining a second chamber for holding a second fluid component. The cartridge also includes first and second fluid outlets in fluid communication with the first and second chambers, respectively. Laying down successive layers or dots of material also includes forming a static mixer to include an elongate tubular body defining a fluid passageway configured to communicate with the first and second fluid outlets, and a plurality of mixing baffles located within the fluid passageway and configured to mix the first and second fluid components.

In another aspect, a computer-implemented method is provided for manufacturing a dispensing system for use with a fluid dispenser. This method includes retrieving a source model for the dispensing system and a plurality of defined control points for the dispensing system from a database. The method also includes automatically generating print instructions for manufacture of the dispensing system. When implemented by a computer-controlled 3D printer, the print instructions produce the dispensing system as described above and throughout this disclosure.

The invention will now be further described by way of example with reference to the accompanying drawings, in which:

The accompanying drawings, which are incorporated in and constitute a part of this specification, illustrate embodiments of the invention and, together with a general description of the invention given above, and the detailed description of the embodiments given below, serve to explain the principles of the invention.
FIG. 1 is a perspective view of an integrated multicomponent dispensing system configured for use with a fluid dispenser in accordance with one embodiment of the invention.
FIG. 2 is a cross-sectional view of the integrated multicomponent dispensing system of FIG. 1 taken along line 2-2 (except at the plurality of mixing baffles, which are not cross-sectioned).
FIG. 3 is a cross-sectional view similar to FIG. 2, showing an alternative static mixer design in cross-section (e.g., along line 2-2) included in the integrated multicomponent dispensing system.
FIG. 4 is an expanded perspective view of a portion of the integrated multicomponent dispensing system of FIG. 3 adjacent an intersection of the static mixer and the cartridge, showing frangible closure members located between the cartridge and the static mixer in a closed position, thereby preventing fluid flow into the static mixer.
FIG. 5 is a perspective view similar to FIG. 4, showing the frangible closure members in an open position, thereby enabling fluid flow from the cartridge into the static mixer.
FIG. 6 is a perspective view of an integrated multicomponent dispensing system in accordance with an alternative embodiment of the invention, this embodiment including additional elements of a fluid dispenser in the system, such as a receptacle and a handle configured for use with actuator assembly components (supplied separately).
FIG. 7 is a cross-sectional view of the integrated multicomponent dispensing system of FIG. 6 taken along line 7-7.
FIG. 8 is a cross-sectional view similar to FIG. 7, showing separately manufactured actuator assembly components added to the integrated multicomponent dispensing system in phantom, to thereby illustrate a final assembly of the fluid dispenser incorporating the integrated multicomponent dispensing system.
FIG. 9 is a block diagram of exemplary prospective manufacturing flow paths for producing an integrated multicomponent dispensing system in accordance with an embodiment of the present invention, including in one example, the distribution of 3D CAD printing instructions in accordance with another embodiment of the invention disclosed herein.
FIG. 10 is a partially exploded perspective view of an integrated multicomponent dispensing system in accordance with a further alternative embodiment of the invention, this embodiment having the static mixer be formed integrally as a unitary piece and then separately connected to the cartridge.

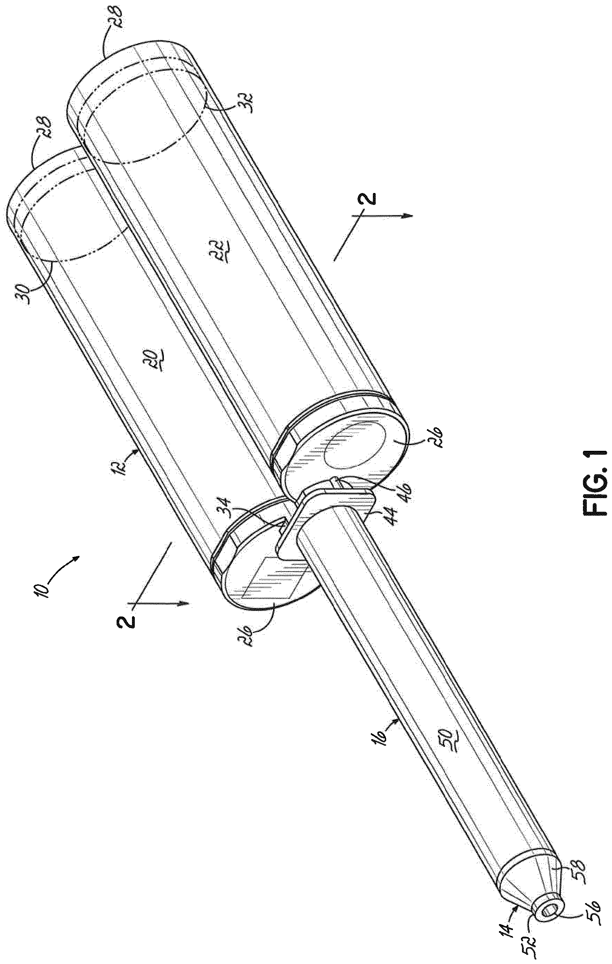

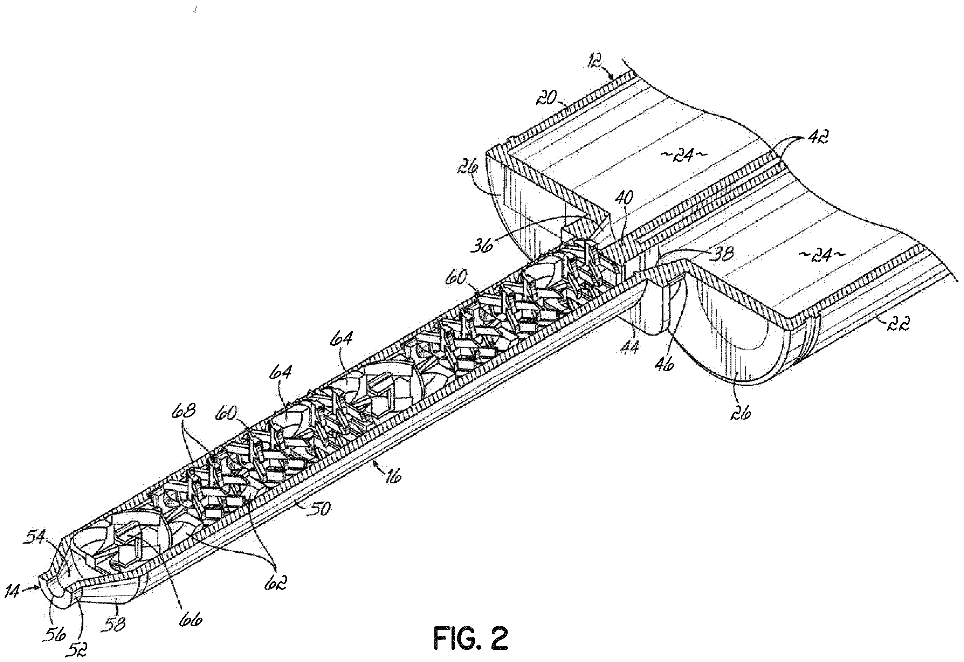

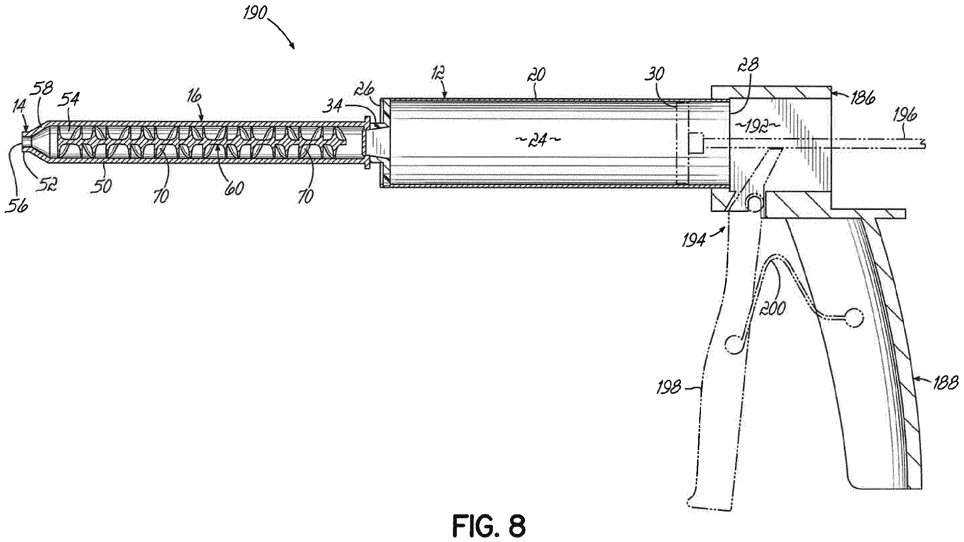

With respect to one embodiment shown in FIGS. 1 and 2, an integrated multicomponent dispensing system 10 for use with a fluid dispenser (see FIG. 8) includes a dual cylinder cartridge 12, a nozzle 14, and a static mixer 16, integrated together. By manufacturing the cartridge 12, nozzle 14, and static mixer 16 as an integrated or unitary single piece, costs of assembly of a finalized fluid dispenser, and costs associated with storage and handling of numerous fluid dispenser elements may be greatly reduced. Thus, the unitary, integrated multicomponent dispensing system 10 in this and other embodiments described below advantageously overcomes several problems with known fluid dispensers and their associated manufacturing processes.

The integrated multicomponent dispensing system 10 of this embodiment is shown in general external detail at FIG. 1 and in detailed cross-section at FIG. 2. To this end, the cartridge 12 includes first and second hollow cylinders 20, 22 each having a chamber 24 for holding and storing first and second fluids, respectively, which may be, for example, two reactive compounds used in multicomponent epoxy glue or molding compound. As shown, each cylinder 20, 22 includes a closed end 26 (at a distal end) proximate the static mixer 16 and an open end 28 (at a proximal end) which facilitates filling of the first and second cylinders 20, 22 with the respective fluids. Though not formed as part of the integrated multicomponent dispensing system 10 in this embodiment, first and second pistons 30, 32 (shown in phantom in FIG. 1) may be inserted into the first and second cylinders 20, 22, respectively, from the open ends 28 after the cylinders 20, 22 have been filled with the respective fluids, as is known in the art. One example of pistons 30, 32 that may be used with this embodiment is described in greater detail in U.S. Patent No. 7,909,211 to Springhorn, which is co-owned by the assignee of this application, and the disclosure of which is incorporated by reference in its entirety herein. While two cylindrical cylinders 20, 22 are shown, a greater number of cylinders could be employed in conjunction when more than two fluid components are to be mixed and dispensed together, and the cylinders 20, 22 could have a non-circular cross-sectional shape, e.g., octagonal or hexagonal, all within the intended scope of the present invention. Moreover, although the first and second cylinders 20, 22 are shown as substantially identical to one another, it will be appreciated that the cylinders 20, 22 could be formed differently without departing from the scope of this disclosure.

In the embodiment shown, the first and second cylinders 20, 22 are joined at the closed ends 26 by a bridge plate 34, which at least partially defines first and second fluid outlets 36, 38 in fluid communication with the chambers 24 in the first and second cylinders 20, 22, respectively. As shown, the first and second fluid outlets 36, 38 may extend through the bridge plate 34 and may be separated from each other within the bridge plate 34 by a divider 40. The divider 40 extends from and/or is integrally formed with a sidewall 42 of each of the first and second cylinders 20, 22 at the location where the sidewalls 42 are proximate and/or adjacent one another. Though not shown, the first and second cylinders 20, 22 may be joined at other locations such as, for example, the open ends 28 or any other suitable location, in order to provide additional support and/or stability to the system 10. As shown, the bridge plate 34 may include a radially-extending flange 44 at a distal end thereof for supporting and/or sealing the static mixer 16 to the cartridge 12; and for supporting the cartridge 12 in the dispenser body (not shown in this Figure). One or more lips 46 extend(s) along the bridge plate 34 from the flange 44 to the second cylinder 22, for example, in order to provide additional structural support to the junction of the cartridge 12 and the static mixer 16. Thus, the static mixer 16 is securely fixed to the cartridge 12; and cartridge 12 is securely fixed to the dispenser body.

In the embodiment shown, the static mixer 16 includes an elongate tubular body 50 extending distally away from the flange 44 and a nozzle 14 at an opposite end of the elongate tubular body 50 with a dispensing tip 52 provided at the end of the nozzle 14. A fluid passageway 54 extends through the static mixer 16 and the nozzle 14 and terminates at an outlet orifice 56 in the dispensing tip 52 for dispensing the fluid mixture formed by the first and second fluids within the static mixer 16. In the embodiment shown, the nozzle 14 further includes a tapered portion 58 positioned between the elongate tubular body 50 and the dispensing tip 52. It should be appreciated that the nozzle 14 and fluid passageway 54 can be of a wide variety of geometries depending on the dispensing application (and further, the nozzle 14 can be a separate added piece to the static mixer 16 or can be integrally formed as a unitary piece with the static mixer 16). Also, while the embodiment shown includes a bridge plate 34 and flange 44, in other embodiments the static mixer 16 may be directly coupled to the cylinders 20, 22, such that the cylinders 20, 22 are joined at the closed ends 26 by the static mixer 16, thereby omitting these bridge plate 34 and flange 44 elements without departing from the scope of this disclosure. Furthermore, although the nozzle 14 is described as an integral part of the static mixer 16 in this embodiment, it will be understood that the nozzle 14 may be separately formed and coupled to the static mixer 16 in other embodiments, depending on the needs of the end user of the fluid dispenser.

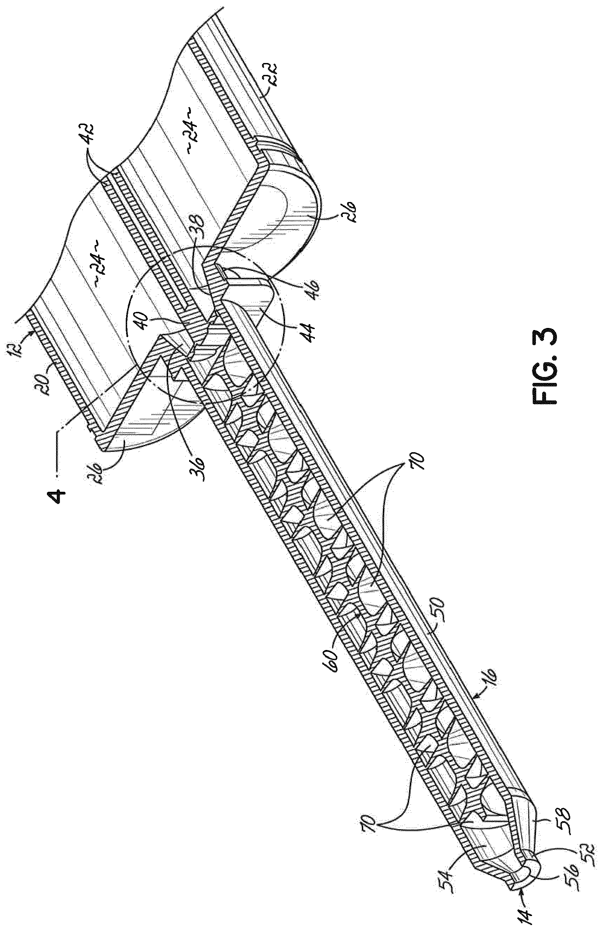

With specific reference now to FIG. 2, the series or stack of mixing baffles 60 is positioned within the static mixer 16 and may be, for example, positioned entirely within the elongate tubular body 50 of the static mixer 16 as shown. The static mixer 16 may include various mixing baffles 60 having complex geometries, including a plurality of undercuts or "blind" features, which may not be possible to directly mold or be molded in series with each other using the known injection molding techniques, and/or may not be moldable within the elongate tubular body 50 as a single unitary piece. For example, the static mixer 16 may include one or more of the following types of mixing baffles: at least one conventional left-handed mixing baffle 62, at least one conventional right-handed mixing baffle 64, at least one conventional cross flow inversion baffle 66, and/or at least one reconfigurable mixing baffle 68, as shown and described more fully in U.S. Patent Pub. No. 2013/0107660 to Pappalardo and U.S. Patent No. 7,985,020 to Pappalardo. Alternatively, the static mixer 16 may include mixing baffles having relatively simple or different geometries. For example, the static mixer 16 may include helical or spiral mixing baffles 70, as shown in cross section in the alternative embodiment of FIG. 3, or a turbo mixer, or may have any other suitable mixer geometry, depending on the particular application. While it may be possible to mold some of these baffles in series on a single baffle stack (e.g., the so-called reconfigurable mixing baffles 68 of the '660 Publication cannot be molded in the final position individually, let alone in a stack of mixing baffles 60), it may not be possible to mold the baffle stack within the static mixer 16 as a single unitary piece, particularly if the baffle stack is to be integral with the elongate tubular body 50. Therefore, as discussed in more detail below, the integrated multicomponent dispensing systems 10 of the various embodiments described herein may be produced by additive manufacturing.

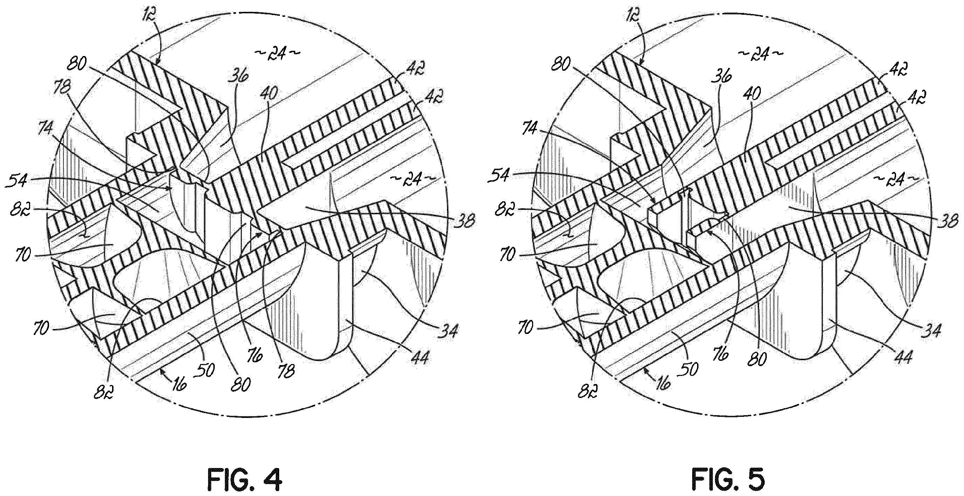

Referring now to FIGS. 4 and 5, in one embodiment the cartridge 12 and/or the static mixer 16 includes first and second frangible closure members 74, 76 positioned between the first and second fluid outlets 36, 38, respectively, and the static mixer 16. Thus, the first and second frangible closure members 74, 76 when in a "closed" position (FIG. 4) block off the passageway 54 of the static mixer 16 from the fluid outlets 36, 38 of the first and second cylinders 20, 22, thereby permitting filling of the cylinders 20, 22 with first and second fluids by known means, as well as storage and transport of the integrated multicomponent dispensing system 10, while preventing the first and second fluids from prematurely entering the static mixer 16 and mixing together.

As shown, the first and second frangible closure members 74, 76 may each include a thin, frangible outer portion 78 attached to an interior wall 82 of the cartridge 12 or static mixer 16 and a hinged inner portion 80 attached to the divider 40. The frangible outer portions 78 may each be configured to shear or otherwise break away from the interior walls 82 under a desired threshold pressure, such that fluid may then flow from the cartridge 12 into the static mixer 16. The hinged inner portions 80, on the other hand, may each be configured to withstand the threshold pressure, such that when the frangible outer portions 78 shear, the frangible closure members 74, 76 may pivot about the hinged inner portions 80 that have stayed intact, respectively, and thereafter extend towards the passageway 54 of the static mixer 16 in an "open" position (FIG. 5), which causes the first and second fluid outlets 36, 38 to be in fluid communication with the passageway 54. In this manner, the first and second frangible closure members 74, 76 may not entirely break away from the cartridge 12 and undesirably interfere with or block the flow of fluid through the static mixer 16. To this end, the frangible outer portions 78 and hinged inner portions 80 are manufacturing with appropriate thickness to enable these reactions to applied pressures.

In one embodiment, the threshold pressure may be selected to be substantially equal to or less than the typical dispensing pressure of the cylinders 20, 22 of the fluid dispenser, e.g. the pressure in the cylinders 20, 22 when the pistons 30, 32 are actuated to advance the fluid. For example, the dispensing pressure applied to the cylinders 20, 22 may be approximately 200 psi to approximately 300 psi, such that the threshold pressure may be substantially equal to or less than approximately 200 psi to approximately 300 psi. In one example corresponding to the dispensing pressure described above, the threshold pressure may be set to approximately 100 psi. The threshold pressure must be selected to be large enough to prevent the frangible outer portions 78 from shearing or otherwise breaking during filling, piston insertion, handling (storage and/or transport), or in the event that the system 10 is inadvertently dropped, in order to prevent unintended flow of the first and second fluids into the static mixer 16, thereby reliably containing the fluid components until a typical dispensing pressure is actively applied by the user, such as with the pistons 30, 32 previously described. When the dispensing pressure is applied, the pistons 30, 32 move the fluid components through the fluid outlets 36, 38 to be received into the fluid passageway 54, where the fluid components are mixed by the mixing baffles 60 and then discharged.

In one embodiment, the integrated multicomponent dispensing system 10 may be inserted into a separate dispenser body (not shown) which may include, for example, a handle and/or a hollow main body or receptacle for receiving an actuator assembly configured to advance the first and second pistons 30, 32 through the first and second cylinders 20, 22, respectively, and a trigger or actuator lever for controlling the actuator assembly. This may be particularly advantageous in applications where it is desirable to re-use the dispenser body. For example, after dispensing the fluids from the first and second cylinders 20, 22, the dispenser body may be removed from the integrated multicomponent dispensing system 10 and re-used with a second integrated multicomponent dispensing system 10 (not shown), and so on. To this end, the dispenser body and the integrated multicomponent dispensing system 10 of this embodiment collectively form a fluid dispenser as understood in the art.

As briefly described above, the integral formation of the components of the integrated multicomponent dispensing system 10 (e.g., the cartridge 12, static mixer 16 and closure members 74, 76, and possibly also the nozzle 14) in these embodiments eliminates the need for assembly and storage of these various elements by an end user or an intermediary manufacturing/distribution party. The integrated multicomponent dispensing system 10 is filled with the fluid components and can be transported as the unitary piece to the end consumer without risk of the fluids breaking through the frangible closure members 74, 76 and prematurely mixing/curing within the static mixer 16. The integral assembly of these elements in the system 10 also eliminates the risk of improper assembly, which can limit or eliminate material waste associated with improper assembly of elements. Additionally, separate discarded elements such as cartridge 12 closures or caps are no longer necessary, again reducing product cost and material waste for a fluid dispenser.

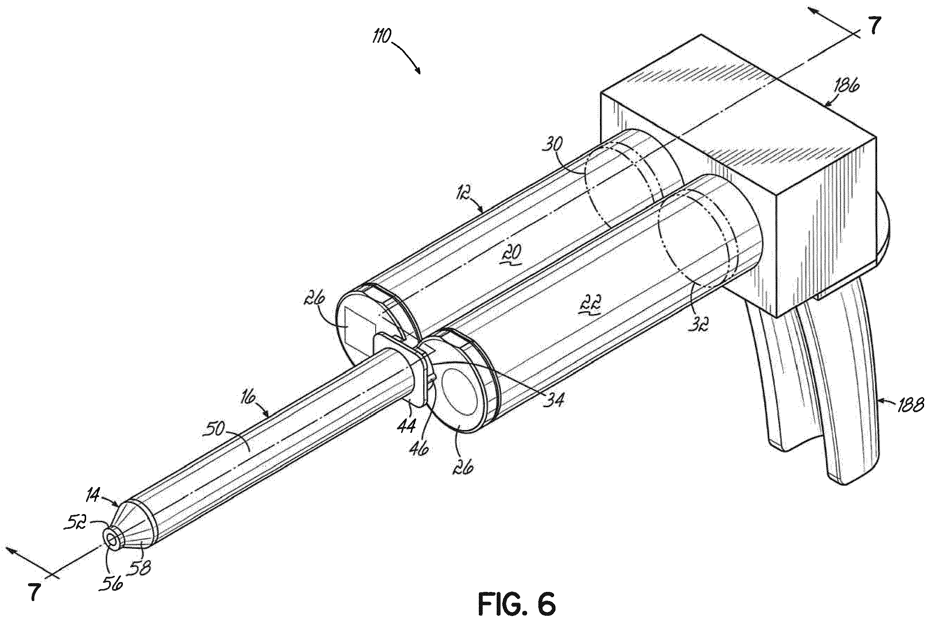

Turning now to an alternative embodiment shown in FIGS. 6 through 8, where like numerals refer to like features (except with numbers in the "100 series" where elements are modified from previous embodiments or newly provided, e.g., the integrated multicomponent dispensing system 110 is a modified version of the integrated multicomponent dispensing system 10 in the previously described embodiment), an integrated multicomponent dispensing system 110 includes a dual cylinder cartridge 12, a nozzle 14, and a static mixer 16, as previously described. Unless otherwise indicated, the cartridge 12, nozzle 14, and static mixer 16 are identical to the cartridge 12, nozzle 14, and static mixer 16 of the previously described embodiment (accordingly, the same reference numbers have been repeated on these elements).

The integrated multicomponent dispensing system 110 also includes dispenser body parts, including a hollow receptacle 186 and a handle 188, integrated together as a unitary piece with the cartridge 12, nozzle 14, and static mixer 16. This embodiment may be particularly advantageous in applications where it is not desirable to re-use a fluid dispenser 190. For example, there are some applications which require entirely clean or sterile dispensers for each dispensing cycle, such that single use is preferred. In addition, by including the receptacle 186 and handle 188 with the cartridge 12, nozzle 14, and static mixer 16 as an integrated or unitary single piece, costs of assembly, storage, and handling of these numerous parts for a fluid dispenser 190 may be further reduced.

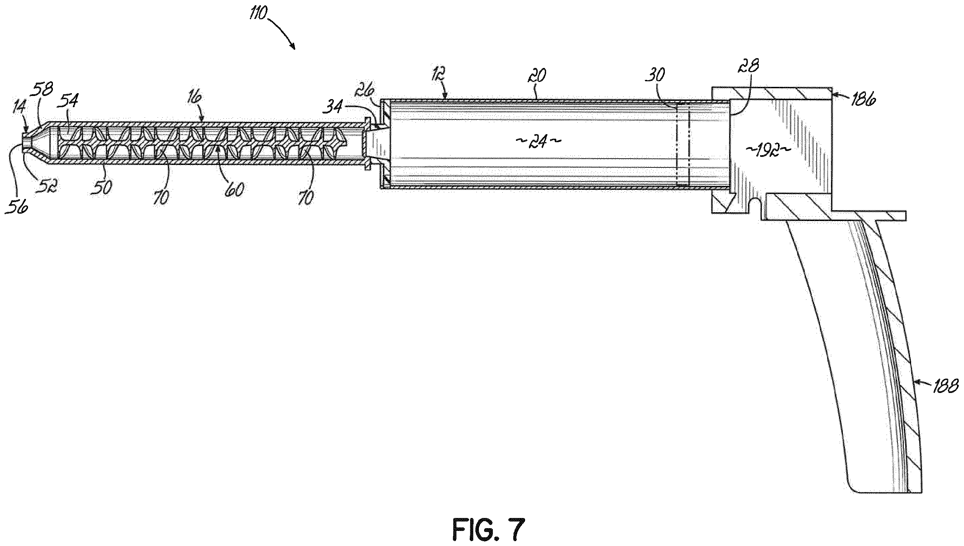

With continued reference to the cross-sectional view of the integrated multicomponent dispensing system 110 and fluid dispenser 190 shown in FIGS. 7 and 8, the receptacle 186 defines a cavity 192 for receiving at least a portion of a separate actuator assembly 194 (shown in phantom in FIG. 8). The actuator assembly 194 may be loaded into the receptacle 186 after the first and second cylinders 20, 22 have been filled with the respective fluids and after first and second pistons 30, 32 have been inserted therein, and may include a first plunger rod 196 and a second plunger rod (not shown). As shown, the cavity 192 may receive the first plunger rod 196 which may extend into the first cylinder 20 and contact the first piston 30, such that movement of the first plunger rod 196 toward the static mixer 16 pushes the first piston 30 forward so as to pressurize the first chamber 24 and thereby advance the first fluid into the static mixer 16. Similarly, the cavity 192 may receive the second plunger rod (not shown) which may extend into the second cylinder 22 and contact the second piston 32, such that movement of the second plunger rod toward the static mixer 16 pushes the second piston 32 forward so as to pressurize the second chamber 24 and thereby advance the second fluid into the static mixer 16. In one embodiment, the first and second plunger rods 196 may be mechanically conjoined and/or simultaneously activated.

The actuator assembly 194 also includes an actuator lever or trigger 198 for activating movement of the first and second plunger rods 196. As shown, a return spring 200 may be coupled to the trigger 198 and to the handle 188 in order to press the trigger 198 forward into an initial position, from which the trigger 198 may be squeezed or pulled backward towards the handle 188 to move the first and/or second plunger rods 196. In one embodiment, the actuator assembly 194 may operate in a similar manner to a conventional fluid dispenser actuator design shown and described in U.S. Patent No. 8,672,193 to Vukic et al. Of course, it will be appreciated that other types of actuator assembly 194 elements may be used with the integrated multicomponent dispensing system 110 without departing from the scope of this disclosure. Thus, by including the receptacle 186 and handle 188 with the cartridge 12, nozzle 14, and static mixer 16 in the integrated multicomponent dispensing system 110, an actuator assembly 194 need simply be loaded into the receptacle 186 in order to complete assembly of the fluid dispenser 190. As such, the advantageous benefits of reduced assembly, handling, and component storage costs described in detail above with respect to previous embodiments of the system 10 are equally or better achieved with this embodiment of the system 110.

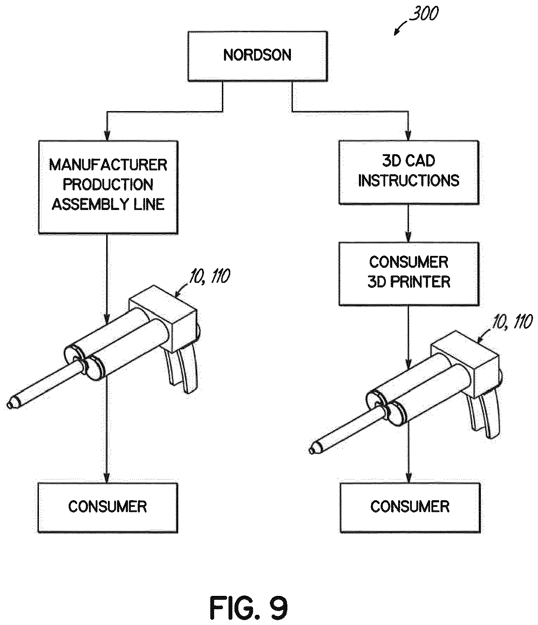

Turning now to FIG. 9, an integrated multicomponent dispensing system 10, 110 according to any of the embodiments disclosed herein may be manufactured either via a traditional manufacturer production assembly line or via 3D computer-assisted drawing ("CAD") instructions sent to a 3D printer. FIG. 9 provides these manufacturing possibilities in a flowchart 300 to help clarify the options available. As previously described, the integrated multicomponent dispensing system 10, 110 may include a static mixer 16 having mixing baffles 60 with complex geometries which may be very difficult or impossible to mold in a final position. Thus, it may be desirable to manufacture the integrated multicomponent dispensing system 10, 110 by 3D printing, stereo lithography, or other similar types of additive manufacturing (e.g., including binder jetting, directed energy deposition, material extrusion, material jetting, powder bed fusion, sheet lamination, vat photopolymerization, etc.). In other words, the system 10, 110 may be constructed by laying down and/or modifying successive layers or dots of material under computer control, thereby integrally forming at least some of the cartridge 12, nozzle 14, static mixer 16 (including complex baffles), receptacle 186, and handle 188 as an integral, unitary single piece.

Thus, in one embodiment of the invention, 3D CAD instructions for constructing the system 10, 110 may be prepared by, for example, acquiring geometric data corresponding to each feature of the system 10, 110, scanning the system 10, 110 (or each element thereof) using a 3D scanner, and/or digitally photographing the system 10, 110 (or each element thereof) and utilizing photogrammetry software to make measurements defining the 3D CAD instructions. The instructions may then be retrieved from a database and sent to, or downloaded onto, a 3D printer in the manufacturer assembly line to process the instructions and produce the integrated multicomponent dispensing system 10, 110, which may then be purchased by a consumer. Alternatively, the instructions may be purchased by a consumer and sent to, or downloaded onto, the consumer's 3D printer, which may process the instructions. The consumer's 3D printer may then produce the system 10, 110 directly for the consumer. Thus, the advantages of the systems 10, 110 described herein can be provided by both manufacturing and supplying a finished system 10, 110 to a consumer, or by supplying the 3D CAD instructions for constructing the systems 10, 110 described in detail herein. It will be appreciated that the 3D CAD instructions may be developed and stored by other software and known computers designed for 3D modeling and generation of printing instructions (indeed, this may be preferred in some contexts instead of "reverse engineering" a product as outlined above).

For example, in one alternative embodiment of a method for manufacturing the systems 10, 110 disclosed above, a source model for the system 10, 110 is retrieved from a database along with a plurality of defined control points for the system 10, 110. A computer uses these elements such as the source model to automatically generate print instructions for the system 10, 110, which can then be sold or otherwise forwarded to a consumer or manufacturing assembly for the 3D printing. The print instructions, when implemented by a computer-controlled 3D printer, will produce the system 10, 110 by additive manufacturing, e.g., by laying down successive layers or dots of material to generate the integral, unitary piece including the cartridge and the static mixer, along with any other elements to be included in the system 10, 110.

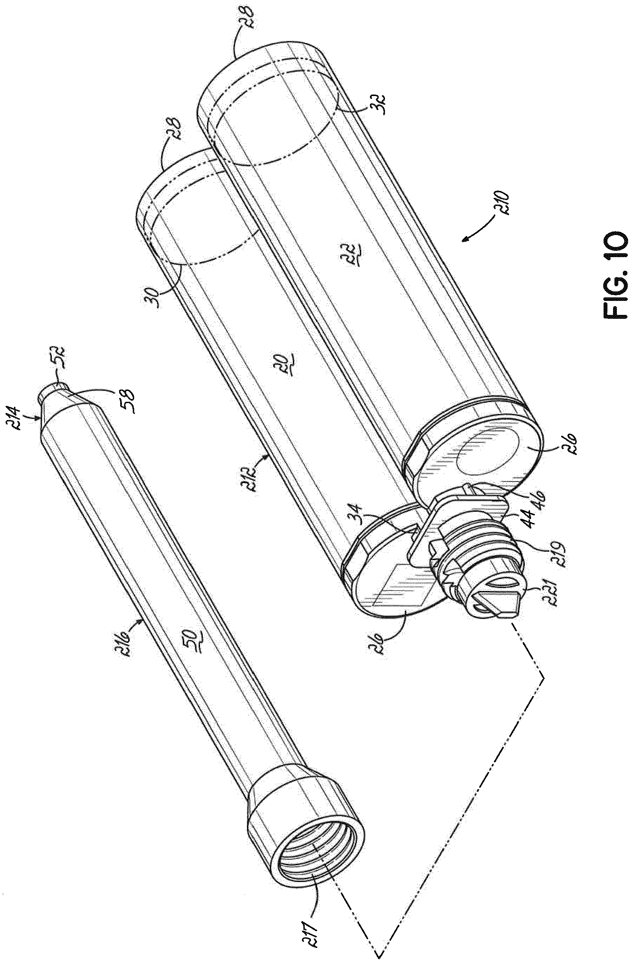

Turning now to another alternative embodiment shown in FIG. 10, where like numerals refer to like features (except with numbers in the "200 series" where elements are modified from previous embodiments or newly provided, e.g., the integrated multicomponent dispensing system 210 is a modified version of the integrated multicomponent dispensing systems 10, 110 in the previously described embodiments), an integrated multicomponent dispensing system 210 includes a dual cylinder cartridge 212, a nozzle 214, and a static mixer 216. Unless otherwise indicated below, the cartridge 212, nozzle 214, and static mixer 216 are identical to the cartridge 12, nozzle 14, and static mixer 16 of the previously described embodiment. In this embodiment, the static mixer 216 is formed as a separate piece from the cartridge 212; however, the elongate tubular body 50 and the plurality of mixing baffles (not shown in FIG. 10) are still formed integrally as a unitary piece, such as by the additive manufacturing methods described above. The nozzle 214 of this embodiment is also formed integrally as a unitary piece with the static mixer 216.

Likewise, the dual cylinder cartridge 212 continues to include features such as the first and second cylinders 20, 22 with the closed ends 26 and a bridge plate 34 extending therefrom. These elements of the cartridge 212 may also be formed integrally as a unitary piece, such as by additive manufacturing, as described above. Because the static mixer 216 and the cartridge 212 are provided as separate pieces in this embodiment, appropriate connecting structures must be provided, as well as (optionally) a cap closure to ensure no preliminary leakage or dispensing of the fluids inside the cylinders 20, 22. In the embodiment shown in FIG. 10, for example, the static mixer 216 includes an internally threaded inlet conduit 217 and the cartridge 212 includes an externally threaded outlet conduit 219 extending from the flange 44 and bridge plate 34. The FIG. 10 embodiment of the cartridge 212 may also include a removable closure cap 221 which initially closes off the distal end of the outlet conduit 219. Thus, the integrated multicomponent dispensing system 210 of this embodiment is assembled from the exploded configuration shown in FIG. 10 by removing the closure cap 221 and then threadably engaging the inlet conduit 217 of the static mixer 216 with the outlet conduit 219 of the cartridge 212. Additional dispenser body parts such as an actuator assembly may then be added as described in detail above. It will be understood that the cartridge 212 of this embodiment may also include the frangible closure members 74, 76 as described above, in addition to or in lieu of the removable closure cap 221.

As such, the advantageous benefits of reduced assembly, handling, and component storage costs described in detail above with respect to previous embodiments of the system 10, 110 are still achieved with this embodiment of the system 210. Furthermore, forming the elements of the static mixer 216 as a unitary piece provides additional mixing element/baffle axial strength compared to conventional separately assembled baffles stacks and mixers, which is desirable in high pressure mixing/dispensing applications. There is also no need for one or more seals (typically needed for higher pressures and/or lower viscosity fluids) located between the mixing elements and the elongate tubular body 50 when the elements of the static mixer 216 are integrally formed as a unitary piece, so additional complicated manufacturing and assembly steps are avoided in this embodiment. Thus, the system 210 including a one-piece static mixer 216 is advantageous over conventional designs for at least these reasons.

While the present invention has been illustrated by a description of various preferred embodiments and while these embodiments have been described in some detail, additional advantages and modifications will readily appear to those skilled in the art. The various features may be used alone or in any combination depending on the needs and preferences of the user.

## Claims

1. An apparatus for use with a fluid dispenser configured to dispense a mixture of multiple fluid components, the apparatus comprising:
a static mixer including an elongate tubular body defining a fluid passageway configured to receive first and second fluid components and a plurality of mixing baffles located within the fluid passageway, the plurality of mixing baffles being configured to mix the first and second fluid components when received in the fluid passageway, and
the elongate tubular body and the plurality of mixing baffles of the static mixer being integrally formed as a unitary piece.

2. A dispensing system, comprising:
the apparatus as recited in claim 1; and
a cartridge including a first cylinder defining a first chamber for holding the first fluid component and a second cylinder defining a second chamber for holding the second fluid component, the cartridge also including first and second fluid outlets in fluid communication with the first and second chambers, respectively, and also in fluid communication selectively with the fluid passageway of the static mixer.

3. The dispensing system of claim 2, wherein the first and second cylinders of the cartridge are integrally formed as a unitary piece with the elongate tubular body and the plurality of mixing baffles of the static mixer.

4. The dispensing system of claim 3, further comprising:
a first frangible closure member positioned between the first fluid outlet and the fluid passageway, and a second frangible closure member positioned between the second fluid outlet and the fluid passageway, the first and second frangible closure members being integrally formed as a unitary piece with the cartridge and the static mixer, with the first and second frangible closure members being initially closed to block flow of the first and second fluid components into the static mixer.

5. The dispensing system of claim 4, wherein the first and second frangible closure members each further comprise:
a frangible outer portion; and
a hinged inner portion.

6. The dispensing system of claim 5, wherein the frangible outer portion of each of the first and second frangible closure members is attached to an interior wall of the cartridge adjacent the first and second fluid outlets.

7. The dispensing system of either claim 5 or claim 6, wherein the cartridge further comprises:
a divider separating the first and second fluid outlets, and the hinged inner portion of each of the first and second frangible closure members is attached to the divider.

8. The dispensing system of any one of claims 5 to 7, wherein the frangible outer portion of each of the first and second frangible closure members defines a thickness designed to break when a threshold pressure is applied to the first and second fluid components in the first and second chambers.

9. The dispensing system of claim 8, wherein the hinged inner portion of each of the first and second frangible closure members defines a thickness designed to withstand the threshold pressure without breaking, thereby enabling pivotal movement of the first and second frangible closure members to open flow from the first and second fluid outlets into the fluid passageway.

10. The dispensing system of either claim 8 or claim 9 wherein the threshold pressure is less than a dispensing pressure applied to the first and second fluid components during dispensing operations, and the threshold pressure is more than forces that are applied during shipping and transport of the dispensing system.

11. The dispensing system of claim 3, further comprising:
at least one fluid dispenser part,
wherein the cartridge, the static mixer, and the at least one fluid dispenser part are integrally formed as a unitary piece.

12. The apparatus of any preceding claim, further comprising a nozzle with a dispensing tip configured to receive the first and second fluid components from the static mixer, wherein the static mixer and the dispensing tip are integrally formed as a unitary piece.

13. A method of manufacturing an apparatus for use with a fluid dispenser, the method comprising:
laying down successive layers or dots of material under computer control to form a static mixer, wherein the laying down of successive layers or dots of material further comprises:
forming the static mixer to include an elongate tubular body defining a fluid passageway configured to receive first and second fluid components and a plurality of mixing baffles located within the fluid passageway, the plurality of mixing baffles being configured to mix the first and second fluid components when received in the fluid passageway, the elongate tubular body and the plurality of mixing baffles of the static mixer being integrally formed as a unitary piece.

14. The method of claim 13, further comprising:
laying down successive layers or dots of material under computer control to form a cartridge, wherein the laying down of successive layers or dots of material to form the cartridge further comprises:
forming the cartridge to include a first cylinder defining a first chamber for holding the first fluid component and a second cylinder defining a second chamber for holding the second fluid component, the cartridge also including first and second fluid outlets in fluid communication with the first and second chambers, respectively, and also in fluid communication selectively with the fluid passageway of the static mixer.

15. The method of claim 14, further comprising:
forming the cartridge and static mixer integrally as a unitary piece,
forming a first frangible closure member positioned between the first fluid outlet and the fluid passageway, and
forming a second frangible closure member positioned between the second fluid outlet and the fluid passageway,
the first and second frangible closure members being integrally formed as a unitary piece with the cartridge and the static mixer, with the first and second frangible closure members being initially closed to block flow of the first and second fluid components into the static mixer.

16. The method of claim 15, further comprising:
forming at least one fluid dispenser part to be integrally formed as a unitary piece with the cartridge and the static mixer.

17. The method of claim 16, wherein forming the at least one fluid dispenser part further comprises forming at least one of:
a receptacle connected to the first and second cylinders of the cartridge; and
a handle.

18. A computer-implemented method of manufacturing an apparatus for use with a fluid dispenser, the method comprising:
retrieving a source model for the apparatus and a plurality of defined control points for the apparatus from a database; and
automatically generating print instructions for manufacture of the apparatus,
wherein the print instructions, when implemented by a computer-controlled 3D printer, produce the apparatus by additive manufacturing so as to comprise:
a static mixer including an elongate tubular body defining a fluid passageway configured to receive first and second fluid components and a plurality of mixing baffles located within the fluid passageway, the plurality of mixing baffles being configured to mix the first and second fluid components when received in the fluid passageway, and
the elongate tubular body and the plurality of mixing baffles of the static mixer being integrally formed as a unitary piece.

19. The method of claim 18, wherein the print instructions, when implemented by a computer-controlled 3D printer, produce the apparatus by additive manufacturing so as to further comprise:
a cartridge including a first cylinder defining a first chamber for holding the first fluid component and a second cylinder defining a second chamber for holding the second fluid component, the cartridge also including first and second fluid outlets in fluid communication with the first and second chambers, respectively, and also in fluid communication selectively with the fluid passageway of the static mixer.

20. The method of claim 19, wherein the first and second cylinders of the cartridge are integrally formed as a unitary piece with the elongate tubular body and the plurality of mixing baffles of the static mixer.
